(19) Europäisches Patentamt
European Patent Office
Office européen des brevets

(11) Veröffentlichungsnummer: **0 548 499 B1**

(12) **EUROPÄISCHE PATENTSCHRIFT**

(45) Veröffentlichungstag der Patentschrift: **13.09.95**

(51) Int. Cl.6: **B01D 53/56**

(21) Anmeldenummer: **92118162.4**

(22) Anmeldetag: **23.10.92**

(54) **Verfahren zur oxidativen Reinigung von Stickoxide enthaltenden Abgasen.**

(30) Priorität: **02.11.91 DE 4136183**

(43) Veröffentlichungstag der Anmeldung:
**30.06.93 Patentblatt 93/26**

(45) Bekanntmachung des Hinweises auf die
Patenterteilung:
**13.09.95 Patentblatt 95/37**

(84) Benannte Vertragsstaaten:
**AT BE CH DE DK ES FR GB GR IE IT LI LU MC
NL PT SE**

(56) Entgegenhaltungen:
**EP-A- 0 457 059
DE-A- 2 537 061
DE-A- 3 642 468**

(73) Patentinhaber: **Degussa Aktiengesellschaft
Weissfrauenstrasse 9
D-60311 Frankturt (DE)**

(72) Erfinder: **Von Wedel, Wedigo
24, Rue Barbet de Jouy
F-75007 Paris (FR)**
Erfinder: **Barenschee, Ernst-Robert, Dr.
Höhenstrasse 21
W-6450 Hanau 6 (DE)**
Erfinder: **Eickhoff, Hubertus
Julius-Pfister-Ring 12
W-8755 Alzenau 4 (DE)**

EP 0 548 499 B1

**Beschreibung**

Die Erfindung betrifft eine Weiterbildung des in DE-PS 40 15 294 offenbarten Verfahrens und erstreckt sich allgemein wiederum auf ein Verfahren zur oxidativen Reinigung von Stickoxiden, insbesondere NO und/oder $NO_2$ enthaltenden Abgasen, insbesondere Prozeßgasen und Abgasen aus Industrie- und Feuerungsanlagen sowie Haus- und Sondermüll-Verbrennungsanlagen, wobei man den Gehalt des Abgases an den Stickoxiden ermittelt, das Abgas mit Wasserstoffperoxid in einer auf die zu entfernende Stoffmenge der Stickoxide bemessenen, zumindest stöchiometrisch den Reaktionsgleichungen

$$2\ NO\ +\ 3\ H_2O_2\ \rightarrow\ 2\ HNO_3\ +\ 2\ H_2O$$
$$bzw.\ 2\ NO_2\ +\ H_2O_2\ \rightarrow\ 2\ HNO_3$$

zur Hälfte genügenden Menge an einem aufgrund erhöhter äußerer Oberfläche und/oder aufgrund vorhandener innerer Oberfläche zumindest gegenüber $H_2O_2$ und/oder NO bzw. $NO_2$ adsorptionsfähigen, $H_2O_2$ aber nicht oder nicht übermäßig zersetzenden Feststoff als Katalysator umsetzt, das umgesetzte Abgas zur Weiterverarbeitung ableitet oder den in ihm enthaltenen Anteil an gasförmigen $HNO_3/H_2O$-Gemisch nach an sich bekannten Maßnahmen zu Salpetersäure oder einer Nitratlösung weiterverarbeitet.

Siehe hierzu auch die EP-A-0 457 059 mit der Priorität der oben genannten Anmeldung vom 15.05.90, die am 21.11.91 veröffentlicht wurde.

In bezug auf die vorliegende Erfindung ist von Belang, daß bei dem obigen Basisverfahren eine Wasserstoffperoxidlösung verwendet wird, welche vor Inberührungbringen mit dem Katalysator in den gasförmigen Zustand übergeführt wird, wobei das mit dem $H_2O_2$-Dampf in geeigneter Menge beladene stickoxidhaltige Abgas bei einer Temperatur von 20 - 120° C zur Umsetzung kommt.

Es wurde nun gefunden, daß sich das Verfahren unter bestimmten Voraussetzungen auch schon mit unverdampfter Wasserstoffperoxidlösung durchführen läßt und daß der $H_2O_2$-Bedarf mitunter geringer sein kann, als aus den Reaktionsgleichungen zu erwarten ist. Zumindest die Hälfte der stöchiometrisch erforderlichen Menge ist jedoch anzuwenden. Ferner eignet sich das Verfahren gleichermaßen zur Entstickung verschiedener Gase mit sehr unterschiedlichen Konzentrationen bzw. Partialdrucken an Stickoxiden.

Gegenstand des Zusatzpatentes ist daher ein Verfahren zur oxidativen Reinigung von Stickoxiden, insbesondere NO und/oder $NO_2$ enthaltenden Abgasen, insbesondere Prozeßgasen und Abgasen aus Industrie- und Feuerungsanlagen sowie Haus-und Sondermüll-Verbrennungsanlagen, wobei man den Gehalt des Abgases an den Stickoxiden ermittelt, das Abgas mit Wasserstoffperoxid in einer auf die zu entfernende Stoffmenge der Stickoxide bemessenen, zumindest stöchiometrisch den Reaktionsgleichungen

$$2\ NO\ +\ 3\ H_2O_2\ \rightarrow\ 2\ HNO_3\ +\ 2\ H_2O$$
$$bzw.\ 2\ NO_2\ +\ H_2O_2\ \rightarrow\ 2\ HNO_3$$

zur Hälfte genügenden Menge an einem aufgrund erhöhter äußerer Oberfläche und/oder aufgrund vorhandener innerer Oberfläche gegenüber $H_2O_2$ und/oder NO bzw. $NO_2$ adsorptionsfähigen, dieses aber nicht oder nicht übermäßig zersetzenden Feststoff als Katalysator umsetzt, das umgesetzte Abgas zur Weiterverarbeitung ableitet oder den in ihm enthaltenen Anteil an gasförmigen $HNO_3/H_2O$-Gemisch nach an sich bekannten Maßnahmen zu Salpetersäure oder einer Nitratlösung weiterverarbeitet.

Das Verfahren ist dadurch gekennzeichnet, daß man die Umsetzung im wesentlichen bei Temperaturen unterhalb von 180° C, vorzugsweise bei 20 bis 100° C, durchführt und dazu das Wasserstoffperoxid als Lösung portionsweise und/oder kontinuierlich mit dem Katalysator in Kontakt bringt.

Der obengenannte Temperaturbereich weicht von dem im Hauptpatent genannten (20 - 120° C) nach oben wie nach unten ab. Bei der Behandlung feuchter Gase kann es zur Verhinderung von Kondensation im Reaktor erforderlich sein, das zu behandelnde Gas vor dem Eintritt in den Reaktor aufzuheizen oder den gesamten Reaktor auf eine Temperatur über dem Taupunkt des am leichtesten kondensierenden Bestandteils des Reaktionsgemisches zu halten. Andererseits können auch Abgase, deren Temperatur unterhalb von 20° C liegt, mit dem erfindungsgemäßen Verfahren von Stickoxiden befreit werden. Tiefere Temperaturen begünstigen im allgemeinen das Adsorptionsvermögen des Katalysators für die Reaktanden. Darüber hinaus ist die Umsetzung der Stickoxide zu Salpetersäure $HNO_3$ exotherm und demnach bei tieferen Temperaturen thermodynamisch begünstigt.

Mit einer regelmäßigen Verbesserung der Katalysatorleistung mit sinkender Temperatur ist jedoch im allgemeinen nicht zu rechnen, weil auch das Reaktionsprodukt $HNO_3$ bei tieferer Temperatur besser adsorbiert wird und somit zunehmend Produkt die Oberfläche belegen kann.

Die Angabe einer oberen Temperatur von 180° C definiert keine absolute Obergrenze. Da sich die Entstickungswirkung jedoch mit zunehmender Temperatur bei gleichzeitig steigender thermischer Zersetzung des Wasserstoffperoxids verschlechtert, erscheint eine Anwendung des Verfahrens oberhalb von 180° C ökonomisch nicht sinnvoll.

Die Mengenbemessung des zur Entstickung erforderlichen Wasserstoffperoxids kann aufgrund einer Konzentrationsmessung der im zu behandelnden Abgas enthaltenen Stickoxide unter Berücksichtigung der in Anspruch 1 angeführten Reaktionsgleichungen erfolgen.

Der $H_2O_2$-Mengenstrom richtet sich dabei auch nach dem jeweils gewünschten Grad der Stickoxidentfernung, wobei Entfernungsgrade herab bis zur Hälfte der aus den angeführten Reaktionsgleichungen errechenbaren stöchiometrischen Menge in Betracht gezogen werden können. Auch größere $H_2O_2$-Mengen, die selbst den über die Reaktionsgleichungen angegebenen stöchiometrischen Bedarf übersteigen können, sind im Bedarfsfall einsetzbar und vorgesehen.

Man kann die Umsetzung in einem Schüttbett, einer Filterkerze, einem Wirbelbett oder mit einem Wabenkatalysator durchführen.

Als Katalysator können folgende als feinteilige, granulierte, tablettierte oder zu beliebigen Formkörpern, eingeschlossen Wabenkörpern, verformte oder auf wabenförmige Träger aufgebrachte Stoffe allein oder in Mischung eingesetzt werden:
- Kieselgele, Fällungskieselsäuren, pyrogene Kieselsäuren, gegebenenfalls in hydrophobierter Form;
- weit- oder mittelporige natürliche oder synthetische Zeolithe;
- Ionenaustauscherharze mit poröser Struktur;
- Phyllosilikate;
- Aluminiumoxid;
- Diatomeenerde;
- Titandioxid;
- natürliche oder synthetische Schichtsilikate;
- Aktivkohlen.

Experimentell näher überprüfte Katalysatoren werden nachfolgend näher gekennzeichnet:

Aerosil 200 (pyrogene amorphe Kieselsäure), Tabletten 6 x 5,5 mm (Entwicklungsprodukt aus Handelsprodukt Aerosil 200 der Fa. Degussa, Frankfurt)

Aerosil 380 (pyrogene amorphe Kieselsäure), Tabletten 3 x 3 mm (Entwicklungsprodukt aus Handelsprodukt Aerosil 380 der Fa. Degussa, Frankfurt)

Sipernat 50 (gefällte Kieselsäure)

Strangpreßlinge 7 x 6 mm

(Entwicklungsprodukt aus Handelsprodukt Sipernat 50 der Fa. Degussa, Frankfurt

FK 700 (gefällte Kieselsäure)

Strangpreßlinge 7 x 6 mm

(Entwicklungsprodukt aus Handelsprodukt FK 700 der Fa. Degussa)

Kieselgel 60, Korngröße 0,2 - 0,5 mm, spez. Oberfläche ca. 450 - 500 $m^2$/g (Artikel 7733 der Fa. Merck, Darmstadt);

Kieselgel 60 H, silanisiert (Artikel 7761 der Fa. Merck, Darmstadt);

Weitporiger 12-Ring Zeolith, Mordenit (Porenweite 6,7 x 7,0 Å, Modul 18 (Si/Al = 9));

Weitporiger 12-Ring Zeolith, dealuminierter y-Zeolith (Porenweite 7,4 Å Modul 200 (Si/Al = 100));

Weitporiger 12-Ring Zeolith, $NH_4$-y-Zeolith (Porenweite 7,4 Å, Modul 5 (Si/Al 2,5)) sowie

mittelporiger 10-Ring Zeolith, ZSM-5 (Porenweite 5,4 - 5,6 Å, Modul 42 (Si/Al 21));

Ionenaustauscherharz, makroporös, stark sauer (Amberlyst 15, Art. 15635 der Fa. Merck, Darmstadt);

Diatomeenerde, geglüht - Handelsprodukt;

Aluminiumoxid 90 (Artikel 1078 der Fa. Merck, Darmstadt);

Titandioxid (Artikel 812 der Fa. Merck, Darmstadt);

Calciumsilikathydrat, enthalten in CATSAN - Hygienestreu der Fa. Effem, Verden/Aller;

Aktivkohle mit einer spezifischen Oberfläche von 1270 $m^2$/g und einer mittleren Porenweite von 160 $\mu$m (Aktivkohleträger 120, Fa. Degussa, Frankfurt);

All diese Stoffe sind hervorragende Katalysatoren.

Eine vorteilhafte Variante des Verfahrens besteht darin, daß man wäßriges Wasserstoffperoxid in einer vorzugsweisen Konzentration bis 85 Gew.-% in der erforderlichen Mengenbemessung durch Versprühen oder Zerstäuben in den Abgasstrom einbringt und das Gemisch dem Katalysator zuführt.

Man kann aber auch mit gleich gutem Ergebnis wäßriges Wasserstoffperoxid in einer vorzugsweisen Konzentration bis 85 Gew.-% in der erforderlichen Mengenbemessung direkt auf den Katalysator rinnen, tropfen oder sprühen lassen.

Im Hauptpatent wurde das Inkontaktbringen vergaster Wasserstoffperoxidlösung mit dem Katalysator beschrieben. Dort liegt Wasserstoffperoxid in feinster Verteilung im Abgas vor. Es hat sich nun herausgestellt, daß eine solche feine Verteilung nicht unbedingt erforderlich ist, sondern durch in dem Abgasstrom versprühte oder direkt auf den Katalysator aufgebrachte Lösung ersetzt werden kann. Die Dosierung kann auch durch Auftropfen oder durch Einbringen in Form eines Flüssigkeitsstrahles auf den Katalysator erfolgen.

Demgemäß bestehen die Möglichkeiten, den Katalysator entweder im trockenen Zustand oder auch unter Kondensationsbedingungen des Reaktionsgemisches mit dem Reagenz zu beaufschlagen. Insbesondere beim direkten Besprühen, Betropfen oder Beträufeln des Katalysators muß darauf geachtet werden, daß nicht nur eine Teilmenge des Katalysators mit der Wasserstoffperoxidlösung benetzt wird und diese demzufolge durch lokale Überversorgung mit Flüssigkeit geflutet wird, während die andere Teilmenge nur unvollständig mit Wasserstoffperoxid in Berührung kommt. Die Folge wäre nämlich eine herabgesetzte Entstickungswirkung, die jedoch reversibel ist.

Wird der Katalysator im Wirbelbett eingesetzt, kann die gleichmäßige Verteilung der Wasserstoffperoxidlösung auf die Katalysatorpartikel mit wenig Aufwand erreicht werden. Wegen der selbsttätigen Mischbewegung im Katalysatorbett genügt es hier, die Wasserstoffperoxidlösung tropfenweise bzw. in Form eines Flüssigkeitsstrahles einzudosieren.

Mitunter, insbesondere bei Abgasen, die relativ feucht sind und zugleich wenig Stickoxide enthalten, wie z. B. bei Abgasen aus Müllverbrennungsanlagen nach einer Rauchgaswäsche, empfiehlt es sich, das feuchte Abgas vor Inkontaktbringen mit dem Katalysator so zu konditionieren, daß die im Rauchgas enthaltene Feuchtigkeit nicht auf dem Katalysator auskondensiert. Die Konditionierung erfolgt am einfachsten durch eine Erwärmung des Gases vor oder während seines Kontaktes mit dem Katalysator, wobei oft schon eine Temperaturdifferenz von 10° C ausreicht.

Auch ein teilweises vorheriges Auskondensieren der Feuchtigkeit durch Druckerhöhung oder Abkühlung mit anschließender Wiedererwärmung oder ein Betrieb der Anlage bei vermindertem Druck können geeignete Maßnahmen sein, um den Katalysator vor der an sich reversiblen Desaktivierung durch einen Flüssigkeitsfilm zu bewahren. Eine weitere Maßnahme zur Gaskonditionierung besteht darin, das zu behandelnde Gaz, z. B. mit Außenluft zu verdünnen. Dadurch sinken im allgemeinen sowohl der Wassertaupunkt, als auch die Temperatur (und die $NO_x$-Konzentration) im zugeleiteten Gas.

Alle genannten Maßnahmen verbessern die Entstickung, wobei sich bei Zusatz von Außenluft jedoch das zu behandelnde Gasvolumen vergrößert. Die Konditionierung des Abgases bzw. die Verhinderung von auskondensierender Feuchtigkeit auf dem Katalysator ist nicht in jedem Fall erforderlich. Dies zeigt eine entstickende Behandlung von 7400 ppm $NO_x$ enthaltender Luft bei Temperaturen zwischen 0° C und 80° C unter Absenkung der $NO_x$-Konzentration auf 350 ppm $NO_x$, wobei Preßlinge (6 x 5,5 mm) aus pyrogener Kieselsäure als Katalysator verwendet werden. Dabei ließen sich die oben genannten Werte im Dauerbetrieb über mehrere Tage aufrechterhalten, obwohl der Katalysator vollständig mit anfallendem Kondensat durchtränkt war. Das Kondensat lief während des Betriebes aus der Katalysatorpackung in einen Auffangbehälter ab.

Weitere Abwandlungen der Erfindung betreffen Zwischen- oder Nachbehandlungen der am Katalysator umgesetzten Stoffe.

So kann man das am Katalysator umgesetzte Abgas, gegebenenfalls nach Verminderung oder Entfernung des darin enthaltenen $HNO_3$ durch Sorption oder Kondensation zu weiterer Verminderung noch enthaltener Stickoxide erneut katalytisch, gegebenenfalls nach erneuter Zugabe von $H_2O_2$, nach Anspruch 1 umsetzen und diese Maßnahme nach Bedarf ein- oder mehrmals wiederholen.

Eine besonders vorteilhafte Maßnahme, welche eine nahezu vollständige Abtrennung von $HNO_3$ in einer einzigen Stufe erlaubt, besteht darin, daß man den $HNO_3$-Anteil im behandelten Abgas durch Kondensation oder durch Waschen mit Wasser oder verdünnter Salpetersäure oder einer Alkali- oder Erdalkalimetallnitratlösung in der Gasphase abreichert und das den Waschvorgang passierende Gas, gegebenenfalls zu weiterer Behandlung, ableitet.

Die Waschflüssigkeit kann zur Anreicherung der Salpetersäure bzw. des Nitratgehaltes unter bedarfsweiser Zugabe von Alkali- oder Erdalkalimetallhydroxidlösung rezykliert und aufkonzentrierte Salpetersäure bzw. Nitratlösung kann bei Bedarf abgezogen werden.

Obwohl bei dem erfindungsgemäßen Verfahren die Gewinnung verwertbarer Salpetersäure im Vordergrund steht, kann es mitunter sinnvoll sein, Nitratsalzlösungen anstelle von Salpetersäure aus den zu $HNO_3$ umgesetzten Stickoxiden zu gewinnen.

Die Maximalkonzentration der Salpetersäure wird durch die Betriebstemperatur der Waschstufe, den Betriebsdruck, den $HNO_3$- und Wassergehalt im behandelten Abgas beeinflußt.

Der $HNO_3$-Gehalt des behandelten Abgases korreliert im allgemeinen direkt mit dem Umsatz der Stickoxide. Bei Abgasen mit einem hohen $NO_x$-Gehalt ist Salpetersäure von über 60 Gew.-% direkt, z. B. durch Kondensation oder Endgaswäsche, gewinnbar, wobei sich die Säurekonzentration im wesentlichen nach Temperatur, Druck, Wassergehalt und $HNO_3$-Gehalt des Gases richtet. Falls Abgase mit einem relativ niedrigen $NO_x$-Gehalt behandelt werden, wie z. B. Abgase aus Müllverbrennungsanlagen, resultiert natürlich selbst bei hohem $NO_x$-Umsatz nur ein geringer $HNO_3$-Gehalt. Die über eine Gaswäsche gewinnbare Salpetersäure liegt bei Abgasen mit ca. 200 ppm $NO_x$ und 60° C bei ca. 20 Gew.-%. Diese Dünnsäure kann nach bekannten Verfahren aufkonzentriert werden. Die Gaswäsche wird wegen des Dampfdruckes von $HNO_3$ mindestens zweistufig mit getrennten Waschkreisläufen für Hauptwäsche und Nachwäsche durchgeführt.

Anstelle der Gewinnung von stark verdünnter Salpetersäure kann es vorteilhafter sein, das umlaufende Waschmedium, wie vorher erwähnt, mit basischen, salzbildenden Reagenzien, wie Alkali- oder Erdalkalihydroxid, zu neutralisieren. Auf diese Weise kann der $HNO_3$-Dampfdruck über dem Waschmedium sehr niedrig gehalten werden mit dem Vorteil, daß hier die Abluftwäsche einstufig erfolgen kann. Ein weiterer Vorteil ist, daß pro Volumeneinheit an Waschmedium mehr $HNO_3$ aus der Gasphase gebunden werden kann, womit sich die angefallene Flüssigkeitsmenge reduziert. Die Nitratlösung kann entweder durch Kristallisation oder durch eine andere Salzabtrennung abgereichert werden oder sie wird in Verdampfern oder in einem Sprühtrockner eingedampft.

Die Zufuhr von Alkalihydroxidlösung in die Waschstufe wird so gesteuert, daß keine unerwünschte simultane Absorption von Begleitgasen, wie Kohlendioxid, stattfindet, welche neben erhöhtem Alkaliverbrauch zur Verunreinigung des Nitratproduktes führen würde.

Im Falle von Kohlendioxid kann dies durch Einstellung des pH-Wertes auf Werte unterhalb von 7 erreicht werden. Liegen neben $HNO_3$ und gegebenenfalls Resten der Stickoxide keine absorptionsfähigen Begleitgase im Abgas vor, kann der pH-Wert frei gewählt werden.

Als besonders günstig hat sich erwiesen, die Mengenbemessung der Wasserstoffperoxidlösung über eine Regelung erfolgen zu lassen, bei der die Stickoxidkonzentration des Rohgases (= zu reinigendes Abgas) und/oder des Reingases oder der Differenzwert zwischen beiden als Führungsgröße dient.

Eine besonders einfache Mengenbemessung für $H_2O_2$ ergibt sich, wenn der $NO_x$-Gehalt des bereits behandelten Abgases für die Regelung der $H_2O_2$-Dosierung herangezogen wird. Der Vorteil dieser Methode besteht darin, daß sich die Wasserstoffperoxidzugabe am Ergebnis der Umsetzung orientiert und somit das Auftreten von oxidierbaren Begleitstoffen, die ebenfalls mit Wasserstoffperoxid reagieren, wie $SO_2$, nicht zu einem $H_2O_2$-Mangel im Hinblick auf die Zielreaktion führen. Andererseits wirken sich aber auch andere Oxidationsreaktionen, z. B. die Oxidation von NO zu $NO_2$ mit Luftsauerstoff, verbrauchssenkend für $H_2O_2$ aus.

Unabhängig von der Zusammensetzung des Rohabgases bietet eine Benutzung des Differenzwerts zwischen Eingang- und Ausgangskonzentration an $NO_x$ als Führungsgröße für die $H_2O_2$-Regelung den Vorteil einer verbesserten Erfassung der Vorgänge im Reaktor.

Die Erfindung wird nachfolgend anhand von Ausführungsbeispielen weiter erläutert.

## Vorbemerkung zu den Ausführungsbeispielen

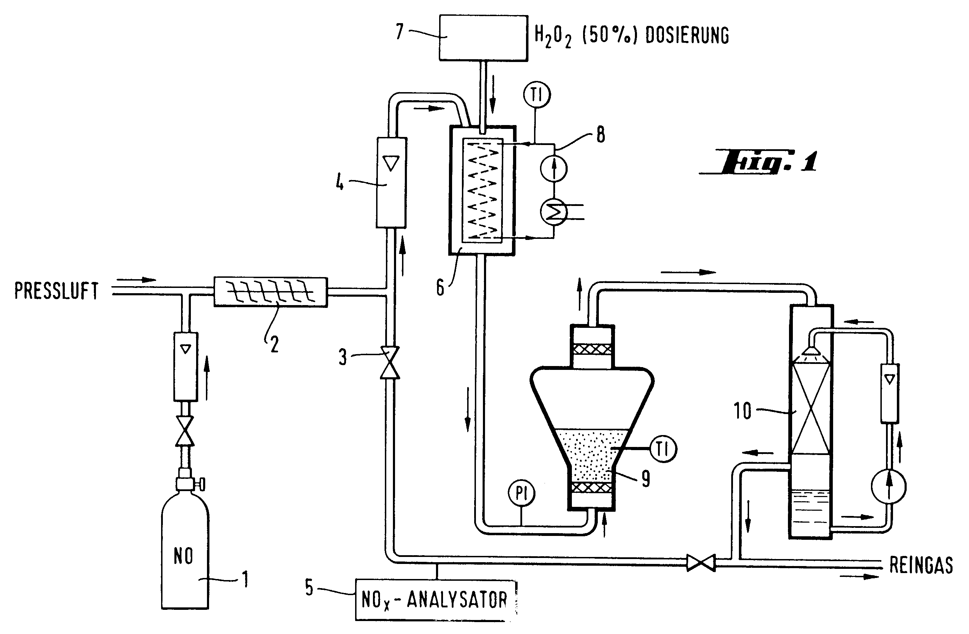

Bei den Beispielen 1 bis 4 fand im wesentlichen die in Beispiel 1 der älteren deutschen Patentanmeldung P 40 15 284.7-43 beschriebene und hier durch Figur 1 wiedergegebene Apparatur Verwendung. Die Apparaturbeschreibung anhand von Figur 1 wird in Verbindung mit dem als "Vergleichsbeispiel 1" in vorliegende Anmeldung übernommenen Beispiel 1 der genannten älteren Anmeldung und den nachfolgenden "Beispielen der Erfindung" wiederholt.

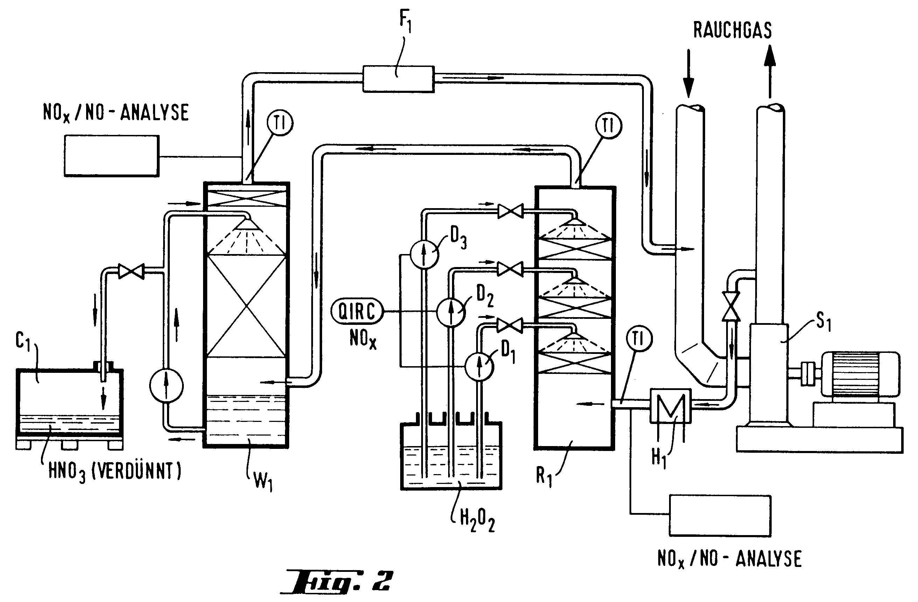

Die in den Beispielen 5 bis 8 gewonnenen Versuchsergebnisse wurden unter Verwendung einer Technikumsapparatur aus Glas gewonnen, bei der der Reaktorteil einen Innendurchmesser von 300 mm aufwies. Diese Apparatur ist schematisch in Figur 2 dargestellt.

## Vergleichsbeispiel 1

Ein Modellgas wird durch Mischen von Preßluft und einer geringen Menge NO-Gas, das einer Gasflasche 1 entnommen wird, hergestellt und durch eine Mischstrecke 2 in den Fallfilmverdampfer 6 (Material: Glas) geleitet. Der Volumenstrom beträgt 2,3 $Nm^3$/h. Er wird durch einen Schwebekörperdurchflußmesser 4 angezeigt. Das Modellgas wird bedarfsweise nach Öffnen des Ventils 3 mit einem handelsüblichen $NO_x$-Analysegerät 5 (Chemolumineszenzprinzip) auf seinen NO- und $NO_x$-Gehalt analysiert. Die Differenz der $NO_x$- und NO-Konzentration ergibt die $NO_2$-Konzentration. Das $NO_2$ bildet sich durch

Luftoxidation aus NO.

Beim Durchströmen des Fallfilmverdampfers wird das Modellgas mit einer definierten Menge verdampfter $H_2O_2$-Lösung beladen. Dazu dient ein Dosierautomat 7, mit dem 50 %ige wäßrige Wasserstoffperoxidlösung kontinuierlich auf die vom Modellgas umströmte Verdampfungsfläche des Fallfilmverdampfers gegeben wird. Die Verdampfungsfläche wird mit Warmwasser 8 beheizt, welches mittels eines Thermostaten auf 80 ° C temperiert wird. Die zudosierte $H_2O_2$-Lösung läuft mit einer Dosierrate von 0,08 ml/min auf das obere Ende der Verdampfungsfläche und fließt an dieser infolge der Schwerkraft herunter. Auf dem Weg nach unten verdunstet die $H_2O_2$-Lösung vollkommen und wird vom Modellgas aufgenommen und weitergetragen.

Der so mit $H_2O_2$-Lösung beladene Gasstrom gelangt in den Wirbelschichtreaktor 9 (Material: Glas), der den Katalysator (60 g Kieselgel, Korngröße 0,2 - 0,5 mm, enthält.

Der Reaktor ist konisch ausgebildet. Im unteren Teil mit dem kleinsten Querschnitt beträgt die Leerrohrgeschwindigkeit des Gases 0,33 m/s. Der Reaktor ist mit einem Thermometer ausgerüstet.

Im Anschluß an Reaktor 9 wird das abreagierte Gasgemisch in eine Füllkörperkolonne 10 (Material: Glas, Durchmesser 4 cm, Länge 40 cm, Packung: Raschigringe 4 x 4 mm, Gleichstrombetrieb) geleitet. Hier wird das im Reaktor gebildete $HNO_3$ bei Raumtemperatur mit rezykliertem Wasser, das sich nach und nach in verdünnte $HNO_3$ verwandelt, absorbiert. Der nicht umgesetzte Stickoxidanteil geht dort aufgrund der schlechten Löslichkeit nur zu einem vernachlässigbaren Teil in Lösung. Der umgepumpte Flüssigkeitsstrom beträgt 1,2 l/min. Ein Teilstrom des aus der Waschkolonne 10 austretenden Gases wird mit dem $NO_x$-Analysator 5 auf seinen Restgehalt an Stickoxiden analysiert.

Bedingungen:     Modellgas: 480 ppm NO und 680 ppm $NO_x$ (200 ppm $NO_2$) bei 2,3 $Nm^3/h$

Temperatur im Reaktor: 40 ° C

Gesamtdruck: 1 bar

Die Konzentrationen im abgeleiteten Gas betragen,

- ohne Zugabe von $H_2O_2$-Lösung in 6: 430 ppm NO und 630 ppm $NO_x$ (200 ppm $NO_2$)
- bei Zugabe von 0,08 ml/min $H_2O_2$, 50 %ige Lösung in 6:
  0 ppm NO und 30 ppm $NO_x$ (30 ppm $NO_2$).

Diese Endkonzentrationen werden 10 Minuten nach Start der $H_2O_2$-Zudosierung erreicht. Das zuvor weiße Kieselgel nimmt im Verlauf dieser Zeit eine gelbliche Farbe an.

Entstickungsgrad:     95,6 %


Beispiel 1

Die Arbeitsweise und die Versuchsanlage entsprechen mit Ausnahme der Reaktorausführung und des Katalysatortyps dem Vergleichsbeispiel 1. Der Katalysator besteht aus Zeolith (Mordenit) der zu einem Wabenkörper (Mordenit-Zeolith Masse: 134 g, Länge: 190 mm, Kantenlänge: 45 mm, Wabenabmessung: 5 x 5 mm, Stegdicke: 1 mm) verformt und in ein Plastikrohr eingebaut war. Die Kanäle des Wabenkörpers wurden von dem mit $H_2O_2$ beladenen Gasgemisch, einem Modellgas, durchströmt. Die $NO_x$-Konzentration im Modellgas betrug 260 ppm (200 ppm NO, 60 ppm $NO_2$), der Volumenstrom betrug 1 $Nm^3/h$. Die Umsetzung der Stickoxide erfolgte bei einer Temperatur von 50 ° C und bei Normaldruck.

Im abgeleiteten Gas wurde eine $NO_x$-Konzentration von 240 ppm $NO_x$ (120 ppm NO, 120 ppm $NO_2$) gemessen. Nach Zugabe von 0,07 ml/min 5 %iger $H_2O_2$-Lösung sank der $NO_x$-Gehalt im abgeleiteten Gas innerhalb von 4 Minuten auf 45 ppm $NO_x$ (32 ppm NO, 13 ppm $NO_2$).

Entstickungsgrad:     81,2 %.


Beispiel 2

Die Arbeitsweise entsprach Vergleichsbeispiel 1 mit dem gleichen Katalysator, jedoch wurde als Lösemittel zur Absorption von $HNO_3$-Gas in der Waschkolonne 10 wäßrige Natriumnitratlösung mit einem $NaNO_3$-Gehalt von 400 g $NaNO_3$/kg Lösung verwendet.

Das Modellgas hatte eine Konzentration von 250 ppm $NO_x$ (170 ppm NO, 80 ppm $NO_2$). Der Volumenstrom des Gases betrug 2,3 $Nm^3/h$. Die Waschsäule wurde bei einer Temperatur von 60 ° C betrieben.

Die $NO_x$-Konzentration im abgeleiteten Gas betrug ohne Zugabe von Wasserstoffperoxid 230 ppm (165 ppm NO, 65 ppm $NO_2$), mit Zugabe von 0,04 ml/min 50 %iger $H_2O_2$-Lösung 32 ppm $NO_x$ (15 ppm NO, 17 ppm $NO_2$).

Entstickungsgrad:     87,2 %

Anmerkung:

Das $HNO_3$-Gas wird im Analysator als $NO_x$ angezeigt. Wenn das nach der katalytischen Umsetzung gasförmig vorliegende Hauptreaktionsprodukt $HNO_3$ nicht weitgehend im Wäscher 10 mit $NaNO_3$-Lösung absorbiert wird, stellt sich dieser hohe Entstickungsgrad nicht ein.

Beispiel 3

a) Es wurde wie im Vergleichsbeispiel 1, jedoch unter Verwendung von pyrogener Kieselsäure (Aerosil 200) als Katalysator, die zu Tabletten mit den Abmessungen 6 x 5,5 mm verpreßt war, gearbeitet. Die Tabletten befanden sich in einem Doppelmantel-Glasrohr mit dem Innendurchmesser von 30 mm.

Die Höhe der Schüttung betrug 200 mm. Als Modellgas wurde 0,74 Vol.% (7400 ppm) $NO_2$ in trockener Luft verwendet. Die Temperatur des Gases im Reaktor wurde über einen Kühlkreislauf zwischen 60° C und -2,5° C variiert. Der Reaktor wurde von oben mit dem $H_2O_2$-beladenen Modellgas durchströmt, um den Abfluß von kondensierender Salpetersäure in ein anschließend angebrachtes Auffanggefäß zu erleichtern.

| Betriebsbedingungen: | |
|---|---|
| Modellgasstrom | 1,6 $Nm^3/h$ |
| Rohgas-$NO_x$-Gehalt | 7400 ppm $NO_2$ (5400 ppm NO 2000 ppm $NO_2$) |
| Katalysator: | 44 g Aerosil 200, 6 x 5,5 mm Tabletten |
| $H_2O_2$-Dosierung, ml/min 50 %ige Lösung: | 0,47 ml/min |

Tabelle 1

| Reaktortemperatur ° C | 60 | 15 | 4 | -2 | -2,5 |
|---|---|---|---|---|---|
| Reingaswerte: | | | | | |
| $NO_x$, ppm | 450 | 620 | 740 | 900 | 1300 |
| NO, ppm | 60 | 100 | 150 | 220 | 450 |
| $NO_2$, ppm | 390 | 520 | 590 | 680 | 850 |
| Entstickungsgrad % | 93,9 | 91,6 | 90 | 87,8 | 82,4 |

Da im Reaktor Salpetersäure zusammen mit Reaktionswasser auskondensierte, war der Katalysator nach einiger Zeit vom Kondensat durchfeuchtet. Die Entstickungswirkung blieb auch in diesem Zustand erhalten.

An dem Meßergebnis für 60° C wird deutlich, daß eine in bezug auf die Reaktionsgleichungen überstöchiometrische Umsetzung der Stickoxide stattgefunden hat. Anstelle der tatsächlich zugegebenen 0,47 ml/min 50 %ige $H_2O_2$-Lösung, wären theoretisch mehr, nämlich 0,587 ml/min erforderlich gewesen, um das erreichte Ergebnis zu erzielen.

b) Die Ausführung erfolgte wie im Teil a) des Beispiels, jedoch ohne Verdampfung von Wasserstoffperoxidlösung in den Modellgasstrom. Die Wasserstoffperoxidlösung wurde vielmehr mit einem Schlauch direkt auf die Katalysatortabletten getropft.

Bei einer Reaktortemperatur von 60° C ergaben sich folgende Reingaswerte in ppm:

| $NO_x$ | NO | $NO_2$ |
|---|---|---|
| 950 | 120 | 830 |

Beispiel 4

Die im Vergleichsbeispiel 1 beschriebene Laborapparatur wurde anstelle mit Modellgas mit Rauchgas aus einer Hausmüllverbrennungsanlage, das nach der 2. Rauchgaswäsche entnommen wurde, beschickt. Das Abgas besaß eine Temperatur von 60° C und war wasserdampfgesättigt. Es wurde mit einer Pumpe durch die Apparatur gesaugt. Letztere bestand aus $H_2O_2$-Verdampfer (Temperatur 80° C), Reaktor (Glassäule, Durchmesser 30 mm, Länge 300 mm), Füllkörperwäscher und nachgeschalteter Gaspumpe. Als Katalysator diente amorphe Kieselsäure (Aerosil 380), die zu 3 x 3 mm Tabletten verpreßt war. Der Gasweg war bis zum Ende der Katalysatorschüttung (Höhe 220 mm) beheizt, um ein Auskondensieren von Wasser im Reaktor zu unterbinden.

Der Stickoxidgehalt wurde auch hier mit einem $NO_x$-Analysator (Chemolumineszenzprinzip) gemessen. Das aus der Müllverbrennungsanlage stammende Rauchgas hatte bei Eintritt in die Versuchsapparatur eine $NO_x$-Konzentration zwischen 170 ppm und 200 ppm, wobei $NO_x$ zu etwa 95 % als NO vorlag.

Das aus der Apparatur abgeleitete Gas wies in Abhängigkeit der Strömungsgeschwindigkeit durch das einstufige Katalysatorfestbett unterschiedliche Restkonzentrationen auf. Die erhaltenen Meßergebnisse sind in Tabelle 2 zusammengefaßt.

**Tabelle 2   Katalytische Umsetzung von Stickoxiden im Abgas einer Müllverbrennungsanlage mit $H_2O_2$**

| Eingangsgas: | 170 – 200 ppm $NO_x$ (95 % NO) wasserdampfgesättigt bei 60° C | | | | |
|---|---|---|---|---|---|
| Reaktortemperatur: | 65° C | | | | |
| Gasstrom, $Nm^3/h$ | 0,55 | 0,55 | 1,33 | 1,33 | 0,80 |
| $H_2O_2$-Dosierung 50 %ige Lösung ml/min | 0 | 0,05 | 0,05 | 0,1 | 0,1 |
| $NO_x$-Gehalt, ppm | 185* | 45 | 78 | 78 | 48 |
| NO-Gehalt, ppm | 176* | – | – | – | 28 |
| $NO_2$-Gehalt, ppm | 9* | – | – | – | 20 |

\* Mittelwert

– nicht gemessen

Beispiel 5

Bei diesem und den folgenden Beispielen wurde eine handelsübliche Glasapparatur (Innendurchmesser 300 mm, Höhe 3000 mm) mit Ein- und Auslaßstutzen sowie drei Siebböden zur Aufnahme des Katalysators und seitlich angebrachten Stutzen über jedem Siebboden verwendet. Diese Apparaturausführung ist schematisch in Figur 2 gezeigt. Der Reaktor $R_1$ wurde für den Wirbelschichtbetrieb von unten nach oben für den Festbettbetrieb in entgegengesetzter Richtung, also von oben nach unten, durchströmt. Nach der Reaktion wurde das Gas einem Füllkörperwäscher $W_1$ (Durchmesser 300 mm, Höhe der Packung 1000 mm, Füllkörper: Hacketten, Lösemittel: Wasser) zugeleitet. Das $NO_x$-haltige Gas wurde über einen nachgeschalteten Ventilator $S_1$ durch die Anlage gesaugt.

Das Gas wurde vor Eintritt in den Reaktor mit einem elektrischen Vorheizer $H_1$ erwärmt. Zur Verminderung von Wärmeverlusten war der Reaktor von außen mit Isoliermaterial verkleidet. Vor Eintritt in den Reaktor und nach Austritt aus dem Wäscher wurde die $NO_x$-Konzentration des Gases nach dem Chemolumineszenzprinzip bestimmt. Durch Umschalten des Gerätes konnte auch die NO-Konzentration gemessen werden. Der Gasstrom durch die Apparatur wurde über eine Messung der Gasgeschwindigkeit (Flügelradsonde) $F_1$ in einem Meßrohr (Länge 2000 mm, Durchmesser 150 mm) bestimmt. Das Meßrohr war im Anschluß an den Füllkörperwäscher eingebaut. Die Temperatur des Gases wurde am Eintritts- und Austrittsstutzen des Reaktors und am Austritt des Füllkörperwäschers mit Thermoelementen gemessen.

Die $H_2O_2$-Dosierung wurde über Zweistoffdüsen (Betriebsgas: Luft) vorgenommen. Je eine Düse war über jeder Katalysatorschicht angebracht. Die Wasserstoffperoxidlösung wurde der Düse jeweils über einen

Dosierautomaten $D_1$ - $D_3$ zugeführt. Auf diese Weise konnte die $H_2O_2$-Zugabe exakt eingestellt werden.

Durch Abstellen der Betriebsluft für die Düsen konnte die $H_2O_2$-Lösung ohne weitere apparative Veränderungen auf den Katalysator aufgetropft bzw. aufgeträufelt werden.

Durch diese Anlage wurde Umgebungsluft (20° C) gesaugt, die in der Ansaugleitung des Reaktors mit NO aus einer Gasstahlflasche auf einem Gehalt von 245 ppm $NO_x$ (230 ppm NO, 15 ppm $NO_2$) versetzt war. Der oberste und der unterste Siebboden waren mit je 700 g Katalysator (Kieselgel, mittlere Porenweite 60 $\mu$m, Korngröße 0,2 - 0,5 mm) beschickt. Der Gasstrom durch die Anlage betrug 100 m³/h (20° C, 1 bar). Unter diesen Bedingungen bildete sich auf jeder Stufe ein Wirbelbett des Katalysators aus. Die $H_2O_2$-Lösung wurde zwischen den beiden Katalysatorschichten eingesprüht (der mittlere Siebboden war für diese Versuchsserie herausgenommen worden).

Die Versuchsergebnisse, bei denen zunächst nur der erste Siebboden, dann beide Siebböden mit Katalysator beschickt waren, sind in Tabelle 3 zusammengefaßt.

Tabelle 3   Versuchsergebnisse mit $NO_x$-haltiger Luft bei 20° C, Gasstrom 100 Nm³/h und 700 g Kieselgel pro Stufe

| | Nur 1. Siebboden | | Beide Siebböden | | | |
|---|---|---|---|---|---|---|
| ml/min H₂O₂ 50 % | 0 | 2 | 0 | 0,5 | 1 | 2 |
| **Reingaswerte:** | | | | | | |
| $NO_x$, ppm | 245 | 90 | 245 | 112 | 57 | 38 |
| NO, ppm | 230 | 30 | 230 | 53 | 34 | 18 |
| $NO_2$, ppm | 15 | 60 | 15 | 59 | 23 | 20 |

Beispiel 6

Die in Verbindung mit Beispiel 5 beschriebene Anlage wurde nunmehr mit wasserdampfgesättigtem Rauchgas (Taupunkt 60° C) einer Müllverbrennungsanlage betrieben. Das Gas wurde vor Eintritt in den Reaktor auf ca. 90° C erwärmt, um im Reaktor keine Kondensation von Wasser auftreten zu lassen. Auf der untersten Siebplatte des Reaktors befanden sich 2100 g Katalysator (Kieselgel 60). Die 50 %ige Wasserstoffperoxidlösung wurde mit einer Dosierrate von 5 ml/min in die ausgebildete Wirbelschicht getropft, wobei die Dosieröffnung einer Sprühdüse ohne Zerstäuber (Einstoffdüse) örtlich fixiert blieb.

Der Volumenstrom des Rauchgases betrug 55 Nm³/h, die mittlere Temperatur im Reaktor betrug ca. 80° C. Der Stickoxidgehalt des Gases am Eingang schwankte um einen Wert von 175 ppm herum (95 % NO).

Das Reingas hatte einen Stickoxidgehalt von 56 ppm (38 ppm NO, 18 ppm $NO_2$). Es wurde ein Entstickungsgrad von 68 % erzielt.

Beispiel 7

Die Betriebsweise entsprach derjenigen von Beispiel 6, jedoch mit dem Unterschied, daß alle 3 Siebplatten (Stufen) der Apparatur gemäß Figur 2 mit Katalysator versehen waren, wobei die Stufen 1 und 2 mit je 2 kg Kieselgel 60 (0,2 - 0,5 mm) als Wirbelschicht, die Stufe 3 mit 4 kg DAY-Zeolith (dealuminierter y-Zeolith, Strangpreßlinge 2 x 3 mm) jedoch als Festbett betrieben wurden. Es wurden 5 ml/min $H_2O_2$-50 %-Lösung ausschließlich auf den bewegten Katalysator der Stufe 1 getropft.

Der Volumenstrom des Rauchgases betrug 50 Nm³/h, die mittlere Temperatur im Reaktor lag bei ca. 80° C. Der Stickoxidgehalt des Gases am Eingang schwankte um 175 ppm.

Das Reingas hatte einen Stickoxidgehalt von 15 ppm (4 ppm NO, 11 pm $NO_2$).

Es wurde ein Entstickungsgrad von 91 % erzielt.

Beispiel 8

Der Betrieb entsprach demjenigen von Beispiel 6 jedoch mit dem Unterschied, daß der Reaktor nur mit einer Siebplatte ausgerüstet war, die zur Stützung eines Schüttbettes von 30 kg Katalysator aus kompaktierter pyrogener Kieselsäure (Aerosil 200, 6 x 5,5 Tabletten) diente.

Der Reaktor wurde vom Rauchgas von oben nach unten durchströmt. Die Wasserstoffperoxidlösung wurde stromaufwärts im Reaktor auf die Katalysatorpackung gesprüht, wobei die Zufuhr der 50 %igen $H_2O_2$-Lösung zur Düse über eine Zweipunktregelung erfolgte. Das Meßsignal des $NO_x$-Analysators für die Reingasseite diente als Eingangssignal für den Zweipunktregler. Dessen Ausgangssignal wirkte als Schaltsignal auf die Pumpe zur $H_2O_2$-Dosierung.Die Förderleistung der Pumpe war auf 1 ml/min $H_2O_2$ 50 %ige Lösung eingestellt.

Der Volumenstrom des Rauchgases betrug 55 $Nm^3$/h, die mittlere Temperatur im Reaktor ca. 70° C. Der Stickoxidgehalt des Gases am Eingang schwankte unregelmäßig um 175 ppm (95 % NO) herum. Der Auslösepunkt des Zweipunktreglers wurde auf 75 ppm eingestellt. Die Stickoxidkonzentration des Reingases schwankte regelmäßig zwischen 50 ppm und 88 ppm.

Durch Dauerdosierung von 1 ml/min 50 %iger $H_2O_2$-Lösung ließ sich eine Stickoxidkonzentration im Reingas von 13 ppm $NO_x$ (ausschließlich aus $NO_2$ bestehend) erreichen.

**Patentansprüche**

1. Verfahren zur oxidativen Reinigung von Stickoxiden, insbesondere NO und/oder $NO_2$ enthaltenden Abgasen, insbesondere Prozeßgasen und Abgasen aus Industrie- und Feuerungsanlagen sowie Haus- und Sondermüll-Verbrennungsanlagen, wobei man den Gehalt des Abgases an den Stickoxiden ermittelt, das Abgas mit Wasserstoffperoxid in einer auf die zu entfernende Stoffmenge der Stickoxide bemessenen, zumindest stöchiometrisch den Reaktionsgleichungen

$$2\ NO\ +\ 3\ H_2O_2\ \rightarrow\ 2\ HNO_3\ +\ 2\ H_2O$$
$$bzw.\ 2\ NO_2\ +\ H_2O_2\ \rightarrow\ 2\ HNO_3$$

zur Hälfte genügenden Menge an einem aufgrund erhöhter äußerer Oberfläche und/oder aufgrund vorhandener innerer Oberfläche gegenüber $H_2O_2$ und/oder NO bzw. $NO_2$ adsorptionsfähigen, $H_2O_2$ aber nicht oder nicht übermäßig zersetzenden Feststoff als Katalysator umsetzt, das umgesetzte Abgas zur Weiterverarbeitung ableitet oder den in ihm enthaltenen Anteil an gasförmigen $HNO_3$/$H_2O$-Gemisch nach an sich bekannten Maßnahmen zu Salpetersäure oder einer Nitratlösung weiterverarbeitet, wobei man die Umsetzung im wesentlichen bei Temperaturen unterhalb von 180° C, vorzugsweise bei 20 bis 100° C, durchführt und dazu das Wasserstoffperoxid als Lösung portionsweise und/oder kontinuierlich mit dem Katalysator in Kontakt bringt.

2. Verfahren nach Anspruch 1,
**dadurch gekennzeichnet**,
daß man die Umsetzung in einem Schüttbett, einer Festbettschüttung, einer Filterkerze, einem Wirbelbett oder mit einem Wabenkatalysator durchführt.

3. Verfahren nach Anspruch 1 oder 2,
**dadurch gekennzeichnet**,
daß als Katalysator folgende, als feinteilige, granulierte, tablettierte oder zu beliebigen Formkörpern, eingeschlossen Wabenkörpern, verformte oder auf wabenförmige Träger aufgebrachte Stoffe allein oder in Mischung eingesetzt werden:
- Kieselgele, Fällungskieselsäuren, pyrogene Kieselsäuren, gegebenenfalls in hydrophobierter Form;
- weit- oder mittelporige natürliche oder synthetische Zeolithe;
- Ionenaustauscherharze mit poröser Struktur;
- Phyllosilikate;
- Diatomeenerde;
- Aluminiumoxid
- Titandioxid;
- natürliche oder synthetische Schichtsilikate;
- Aktivkohlen.

**4.** Verfahren nach den Ansprüchen 1 bis 3,
**dadurch gekennzeichnet,**
daß man wäßriges Wasserstoffperoxid in einer vorzugsweisen Konzentration bis 85 Gew.-% in der erforderlichen Mengenbemessung durch Versprühen oder Zerstäuben in den Abgasstrom einbringt und das Gemisch dem Katalysator zuführt.

**5.** Verfahren nach den Ansprüchen 1 bis 3,
**dadurch gekennzeichnet,**
daß man wäßriges Wasserstoffperoxid in einer vorzugsweisen Konzentration bis 85 Gew.-% in der erforderlichen Mengenbemessung direkt auf den Katalysator rinnen, tropfen oder sprühen läßt.

**6.** Verfahren nach den Ansprüchen 1 bis 5,
**dadurch gekennzeichnet,**
daß der Katalysator entweder im trockenen Zustand oder auch unter Kondensationsbedingungen des Reaktionsgemisches mit dem Reagenz beaufschlagt wird.

**7.** Verfahren nach den Ansprüchen 1 bis 6,
**dadurch gekennzeichnet,**
daß man das am Katalysator umgesetzte Abgas, gegebenenfalls nach Verminderung oder Entfernung des darin enthaltenen $HNO_3$ durch Sorption oder Kondensation zu weiterer Verminderung noch enthaltener Stickoxide erneut katalytisch, gegebenenfalls nach erneuter Zugabe von $H_2O_2$, nach Anspruch 1 umsetzt und diese Maßnahme nach Bedarf ein- oder mehrmals wiederholt.

**8.** Verfahren nach den Ansprüchen 1 bis 7,
**dadurch gekennzeichnet,**
daß man den $HNO_3$-Anteil im behandelten Abgas durch Kondensation oder durch Waschen mit Wasser oder verdünnter Salpetersäure oder einer Alkali- oder Erdalkalimetallnitratlösung in der Gasphase abreichert und das den Waschvorgang passierende Gas, gegebenenfalls zu weiterer Behandlung, ableitet.

**9.** Verfahren nach Anspruch 8,
**dadurch gekennzeichnt,**
daß man die Waschflüssigkeit zur Anreicherung der Salpetersäure bzw. des Nitratgehaltes unter bedarfsweiser Zugabe von Alkali- oder Erdalkalimetallhydroxidlösung rezykliert und aufkonzentrierte Salpetersäure bzw. Nitratlösung bei Bedarf abzieht.

**10.** Verfahren nach den Ansprüchen 1 bis 9,
**dadurch gekennzeichnet,**
daß die Mengenbemessung der Wasserstoffperoxidlösung über eine Regelung erfolgt, bei der die Stickoxidkonzentration des Rohgases, des bereits behandelten Abgases (Reingases) oder beider oder der Differenzwert zwischen beiden als Führungsgröße dient.

**Claims**

**1.** Process for the oxidative purification of nitrogen oxides, in particular waste gases containing NO and/or $NO_2$, particularly process gases and waste gases from industrial plants and furnaces, as well as from domestic incineration plants and incineration plants for hazardous waste, whereby the content of waste gas in the nitrogen oxides is determined, the waste gas is reacted with a quantity of hydrogen peroxide which is calculated for the quantity of nitrogen oxides to be removed and which satisfies at least half of the stoichiometrically required quantity for the reaction equations

$$2\ NO + 3\ H_2O_2 \rightarrow 2\ HNO_3 + 2\ H_2O$$
$$\text{or } 2\ NO_2 + H_2O_2 \rightarrow 2\ HNO_3,$$

on a solid used as a catalyst, which solid, owing to an increased external surface and/or owing to the internal surface present, can adsorb $H_2O_2$ and/or NO or $NO_2$ but does not decompose $H_2O_2$, or not excessively, the reacted waste gas is led away for further processing or the proportion contained therein of gaseous $HNO_3/H_2O$ mixture is further processed according to methods known per se to form nitric acid or a nitrate solution, with the reaction being carried out essentially at temperatures of below 180°C, preferably at from 20 to 100°C, and for this purpose the hydrogen peroxide is brought into contact with the catalyst as a solution, in portions and/or continuously.

2. Process according to claim 1,
characterised in that
the reaction is carried out in a bed, a fixed bed, a filter cartridge, a fluidised bed, or by means of a honeycomb catalyst.

3. Process according to claim 1 or 2,
characterised in that
the following substances, alone or in mixtures, are used as catalyst, as fine-particled, granulated, pelleted shaped bodies, or bodies shaped into any form including honeycomb bodies, or applied to honeycombed supports:
   - silica gels, precipitated silicas, pyrogenic silicas, optionally in a form rendered hydrophobic;
   - wide-pored or medium-pored natural or synthetic zeolites;
   - ion exchange resins having a porous structure;
   - phyllosilicates;
   - diatomaceous earth;
   - alumina;
   - titanium dioxide;
   - natural or synthetic sheet silicates;
   - activated carbons.

4. Process according to claims 1 to 3,
characterised in that
aqueous hydrogen peroxide, in a preferred concentration of up to 85% by weight, is introduced in the required measured quantity into the stream of waste gas by spraying or atomising, and the mixture is led to the catalyst.

5. Process according to claims 1 to 3,
characterised in that
aqueous hydrogen peroxide, in a preferred concentration of up to 85% by weight, is caused to trickle, drop or spray in the required measured quantity directly onto the catalyst.

6. Process according to claims 1 to 5,
characterised in that
the catalyst, either in the dry state or under the condensation conditions of the reaction mixture, is brought into contact with the reagent.

7. Process according to claims 1 to 6,
characterised in that
the waste gas which is reacted on the catalyst, optionally after decreasing or removing the $HNO_3$ contained therein by sorption or condensation to further decrease the nitrogen oxides still contained, is again reacted catalytically, optionally after further addition of $H_2O_2$, according to claim 1, and this procedure is repeated one or more times as required.

8. Process according to claims 1 to 7,
characterised in that
the proportion of $HNO_3$ in the treated waste gas is depleted in the gas phase by condensation or by washing with water or with dilute nitric acid or with an alkaline or alkaline earth metal nitrate solution and the gas passing through the washing operation is led away, optionally for further treatment.

9. Process according to claim 8,
characterised in that
the washing liquid is recycled in order to concentrate the nitric acid or the nitrate content, with alkaline or alkaline earth metal hydroxide solution being added as required, and the concentrated nitric acid or nitrate solution is drawn off as required.

**10.** Process according to claims 1 to 9,
characterised in that
the measurement of the quantity of the hydrogen peroxide solution is carried out using a control whereby the nitrogen oxide concentration of the crude gas, of the already treated waste gas (pure gas) or of both of these or the difference in value between both is used as the control input.

**Revendications**

**1.** Procédé pour la purification par oxydation d'oxydes d'azote en particulier de gaz d'échappement ou gaz de fumée contenant du NO et/ou du $NO_2$, particulièrement de gaz de procédé et de gaz d'échappement d'installations industrielles ou de chaufferies ainsi que d'installations de combustion domestiques et de déchets spéciaux, dans lequel on détermine la teneur du gaz d'échappement en oxydes d'azote, on transforme le gaz d'échappement avec du peroxyde d'hydrogène ou une quantité mesurée sur la masse des oxydes d'azote à éliminer satisfaisant pour moitié au moins stoechiométriquement aux équations réactionnelles :

$$2\ NO\ +\ 3\ H_2O_2 \rightarrow 2\ HNO_3\ +\ 2\ H_2O$$
$$ou\ 2\ NO_2\ +\ H_2O_2 \rightarrow 2\ HNO_3$$

sur une matière solide comme catalyseur, apte à l'adsorption vis-à-vis de $H_2O_2$ et/ou de NO ou $NO_2$ en raison d'une surface extérieure élevée et/ou en raison d'une surface interne existante, mais ne décomposant pas ou pas excessivement $H_2O_2$, ou dérive le gaz d'échappement déplacé vers le traitement ultérieur ou on convertit la proportion contenue en lui de mélange gazeux $HNO_3.H_2O$ selon des mesures connues en soi en acide nitrique ou en une solution de nitrate, tandis qu'on réalise la réaction essentiellement à des températures en dessous de 180°C, de préférence de 20 à 180°C et qu'on amène en contact avec cela le peroxyde d'hydrogène comme solution par portions et/ou de manière continue avec le catalyseur.

**2.** Procédé selon la revendication 1, caractérisé en ce qu'on réalise la conversion sur un lit en vrac, un remplissage en lit fixe, un filtre en forme de bougie, un lit fluidisé ou avec un catalyseur en nid d'abeilles.

**3.** Procédé selon les revendications 1 ou 2, caractérisé en ce que, comme catalyseur on met en oeuvre seules ou en mélange des substances suivantes en tant que matières finement divisées, granulées, en comprimés façonnées ou en corps de forme quelconque, en corps alvéolaires englobés ou appliquées sur des supports en forme alvéolaires :
- gels de silice, acides siliciques de précipitation, acides siliciques pyrogénés, éventuellement sous forme hydrophobe,
- des zéolites naturelles ou synthétiques avec des pores larges ou moyens,
- des résines échangeuses d'ions avec une structure poreuse,
- des phyllosilicates,
- de l'oxyde d'aluminium,
- de la terre à diatomée,
- de l'oxyde de titane,
- des silicates de mellaires naturels ou synthétiques
- du charbon actif.

**4.** Procédé selon les revendications 1 à 3, caractérisé en ce qu'on introduit du peroxyde d'hydrogène aqueux dans une concentration préférée jusqu'à 85 % en poids dans le dimensionnement quantitatif nécessaire, par pulvérisation ou vaporisation dans le courant de gaz d'échappement et on amène le mélange au catalyseur.

**5.** Procédé selon les revendications 1 à 3, caractérisé en ce qu'on fait s'écouler, goutter ou vaporiser du peroxyde d'hydrogène aqueux dans une concentration préférée jusqu'à 85 % dans le dimensionnement volumique nécessaire directement sur le catalyseur.

**6.** Procédé selon les revendications 1 à 5, caractérisé en ce que le catalyseur est soumis au réactif soit à l'état sec soit dans des conditions de condensation du mélange réactionnel avec le réactif.

7. Procédé selon les revendications 1 à 6, caractérisé en ce qu'on convertit à nouveau catalytiquement selon la revendication 1 le gaz d'échappement transformé sur le catalyseur éventuellement après réduction ou élimination du $HNO_3$ contenu dedans, par absorption ou condensation, en une autre réduction d'oxydes d'azote encore contenus, éventuellement après une nouvelle addition de $H_2O_2$, et cette mesure peut être répétée une ou plusieurs fois selon le besoin.

8. Procédé selon les revendications 1 à 7, caractérisé en ce qu'on appauvrit dans la phase gazeuse la proportion de $HNO_3$ dans le gaz d'échappement traité par condensation ou par lavage avec de l'eau ou de l'acide nitrique étendu ou une solution de nitrate de métal alcalin ou alcalino-terreux et on détourne le gaz passant l'opération de lavage éventuellement vers un autre traitement.

9. Procédé selon la revendication 8, caractérisé en ce qu'on recycle le liquide de lavage pour l'enrichissement de l'acide nitrique ou de la teneur en nitrate, en ajoutant au besoin de la solution d'hydroxyde de métal alcalin ou alcalino-terreux et on extrait en cas de besoin de l'acide nitrique concentré ou de la solution de nitrate.

10. Procédé selon les revendications 1 à 9, caractérisé en ce que le dimensionnement volumique de la solution de peroxyde d'hydrogène a lieu par une régulation, dans laquelle la concentration en oxydes d'azote du gaz brut, du gaz d'échappement (gaz purifié) déjà traité ou des deux ou bien la valeur de la différence entre les deux sert de grandeur de commande.

Fig. 1

H₂O₂ (50%) DOSIERUNG

PRESSLUFT

NO

NOₓ - ANALYSATOR

REINGAS

EP 0 548 499 B1

RAUCHGAS

$S_1$

$NO_x / NO$ - ANALYSE

$H_1$

TI

$R_1$

TI

$D_1$

$D_2$

$D_3$

$H_2O_2$

QIRC
$NO_x$

$F_1$

TI

$W_1$

$NO_x / NO$ - ANALYSE

$HNO_3$ (VERDÜNNT)

$C_1$

Fig. 2